# EUROPEAN PATENT APPLICATION

(11) **EP 4 391 446 A1**
(43) Date of publication of application: **26.06.2024**
(21) Application number: 22215021.1
(22) Date of filing: 20.12.2022
(51) Int. Cl.: H04L 9/40, G06F 21/62

(54) **PRIVACY SHIELD**

(71) Applicant: Unify Patente GmbH & Co. KG, 81739 München (DE)
(72) Inventor: Anderton, Wayne, 82284 Grafrath (DE)
(74) Representative: Schaafhausen Patentanwälte PartGmbB

(57) **Abstract**

The present invention relates to a method and a system for secure handling of sensitive data within a Document Object Model (DOM). Usually, the data is protected during transmission over the Internet but is not protected once the data is presented to the browser's Document Object Model tree. The data is shown in clear text making it vulnerable to unauthorized access. The protection this invention offers will help to stop any unwanted access taking information out of the frontend or the background of an application's (e. g. browser's) DOM tree.

## Description

The present invention relates to a method for secure handling of sensitive data within a Document Object Model (DOM). Usually, the data is protected during transmission over the Internet but is not protected once the data is presented to the browser's Document Object Model tree. The data is shown in clear text making it vulnerable to unauthorized access. The protection this invention offers will help to stop any unwanted access taking information out of the frontend or the background of an application's (e. g. browser's) DOM tree.

The Document Object Model is a cross-platform and language-independent interface that treats an XML (eXtensible Markup Language) or HTML (HyperText Markup Language) document as a tree structure wherein each node is an object representing a part of the document. The DOM represents a document with a logical tree. Each branch of the tree ends in a node, and each node contains objects. DOM methods allow programmatic access to the tree. They can be used to change the structure, style or content of a document. The nodes can have event handlers attached to them. Once an event is triggered, the event handlers get executed.

The principal standardization of the DOM was handled by the World Wide Web Consortium (W3C), which last developed a recommendation in 2004. Web Hypertext Application Technology Working Group (WHATWG) took over the development of the standard, publishing it as a living document. The W3C now publishes stable snapshots of the WHATWG standard. The Web Hypertext Application Technology Working Group is a community of people interested in evolving HTML and related technologies. The WHATWG was founded by individuals from Apple Inc., the Mozilla Foundation and Opera Software, leading Web browser vendors, in 2004. The central organizational membership and control of WHATWG today - its "Steering Group" - consists of Apple, Mozilla, Google, and Microsoft. WHATWG community members work with the editor of the specifications to ensure correct implementation.

To render a document such as a HTML page, most web browsers use an internal model similar to the DOM. The nodes of every document are organized in a tree structure, called the DOM tree, with the topmost node named as "Document object". When an HTML page is rendered in an application like, for example, a browser, the browser downloads the HTML into local memory and automatically parses it to display the page on screen. However, the DOM does not necessarily need to be represented as a tree, and some browsers have used other internal models.

When a web page is loaded, the application or the browser creates a DOM of the page, which is an object-oriented representation of an HTML document that acts as an interface between, e. g. JavaScript, and the document itself. This allows the creation of dynamic web pages, because within a page JavaScript can add, change, and remove any of the HTML elements and attributes, change any of the CSS styles, react to all the existing events and create new events.

The structure is characterized in the object model by the following relations:
- The root node table has as children the element nodes thead and tbody.
- Conversely, the table element node is a parent of thead and tbody.
- Nodes with a common parent (for example, the two th element nodes) are called siblings.
- Starting from any node, any other node is reachable through these relationships.

The main node types in DOM are:
- A document node representing the entire tree structure.
- A document fragment node representing a part of the tree structure.
- An element node corresponding to exactly one element in HTML or XML.
- An attribute node corresponding exactly to an attribute in HTML or XML.
- A text node representing the text content of an element.

However, attribute nodes are a special type of node because they do not occur as nodes in the tree structure which is formed primarily by element nodes. Attribute nodes are therefore not children of element nodes, but properties of them.

When processing a document, the first step is for the program, application or browser to read in an existing document and create a document object. Using this object, the content, structure and presentation can be accessed by means of the Application Programming Interfaces (API's) methods. In particular, DOM allows navigation between the individual nodes of a document, the creation, movement and deletion of nodes, and reading, changing and deleting text contents. At the end of processing, a new XML or HTML document can be generated from the document object by the so-called serialization.

At present, it is standard for browsers to present text in a clear form within the browser's DOM tree. However, there is no current mechanism that protects sensitive text from being displayed in a clear text in any part of the browser's DOM tree. Sensitive texts include, in particular, passwords, account numbers, credit card numbers, and the like, but also personal data such as medical status, insurance status, gender, age, religious confession, and the like.

There are solutions in the state of the art, but they cover this issue incompletely and unsatisfactorily. For example, at https://highside.io a tool is shown that encrypts the data before sending it to the server. The tool is used to retrieve the encrypted data where they decrypt the string on the client side. However, even here it is possible to read information from the DOM tree before the data is encrypted. Highside.io has developed a solution that sends encrypted data to a database, but this does not protect the data once it has been decrypted. The result of their decryption writes the decrypted text into the DOM tree using clear text.

Today's standard browser technology does not provide the level of protection that should be achieved when processing sensitive content after the data has been transferred to the browser. Users today are forced to accept that sensitive information is subject to industry standards that are not strong enough to protect valuable information after the data has been stored in the browser.

A DataURL (Uniform Resource Locator) scheme is a Uniform Resource Identifier (URI) scheme that allows data to be embedded in (HTML) source code(s) as if it were external resources. This allows the data, for example, for a graphic, to be placed within an HTML document directly in the HTML source code instead of requesting it from a file as it is usually the case.

The DataURI scheme is a Uniform Resource Identifier scheme that provides a way to include data in-line in web pages as if they were external resources. It is a form of file literal or document in this case. This technique allows elements that are normally separated such as images and style sheets to be fetched in a single Hypertext Transfer Protocol (HTTP) request which may be more efficient than multiple HTTP requests and used by several browser extensions to package images as well as other multimedia contents in a single HTML file for page saving. As of 2022, data URIs are fully supported by most major browsers, and partially supported in the Internet Explorer.

Therefore, the present invention is based on the object to provide a method and a corresponding system for secure handling of sensitive data within a Document Object Model (DOM). In particular, a method and a system to avoid displaying clear text within a DOM.

This object is solved by a method having the features according to claim 1, an application having the features of claim 12 and a system having the features of claim 15. Preferred embodiments of the invention are defined in the respective dependent claims.

According to the invention, a method for secure handling of sensitive data within a Document Object Model (DOM) is provided, the method comprising the steps of:
- detecting, by a frontend of an application, a placing of sensitive data to a protected area by a user;
- sending, by frontend, the sensitive data to a backend of the application via the protected area;
- encrypting, by the backend, the sensitive data with encryption techniques;
- converting, by the backend, the encrypted sensitive data into an encryption data string by using a security tag type; and,
- sending, by the backend, the encryption data string with security tag type back to the frontend.

In the sense of the invention, sensitive data is understood to mean any data a user considers as private, as confidential or worth being protected. Hereunder could be among others the following data: personal data revealing racial or ethnic origin, political opinions, religious or philosophical beliefs; trade-union membership; genetic data, biometric data processed solely to identify a human being; health-related data; data concerning a person's sex life or sexual orientation.

In the sense of the invention a placing of data to a protected area is, for example, a simple drag and drop of information. Meaning that a user marks with a computer mouse, a keyboard, a pen or in case of a touch screen with the fingers, the selected information and drags this to a protected area. However, it can be configured that the user has only to mark the information and then press a button or use a short key and then the data is processed according to the method via the protected area. Selected information in sense of the invention can be in the form of a text or an image or else. The information that is marked or placed is often that of a communication and is communicated in a chat or other conversation like environments.

In software engineering and in the sense of the invention, the terms frontend and backend refer to the separation of concerns between the presentation layer (frontend), and the data access layer (backend) of a piece of software, application, or the physical infrastructure or hardware. Wherein separation of concerns is a design principle for separating a computer program or application into distinct sections. These distinct sections often are referred to as scripts. A frontend script can send selected data to a backend script. These scripts are completely separated from each other and can only communicate via the protected area.

The security tag also named shield tag is specific to the invention. The tag is appended to the encryption by the background script. The frontend script will use this tag to further format the styles of the encryption (i. e., replace an ugly encryption string with a Privacy Shield icon). Therefore, this tag can comprise different types which can be recognized by the frontend or backend and these types can then provoke different actions.

According to a preferred embodiment, the method further comprising the steps:
- identifying, by the frontend, the security tag type in the encrypted data string;
- sending, by the frontend, the encrypted data via the protected area to the backend for decryption;
- decrypting, by the backend, the data into clear text and rebuilding the decrypted information structure as a temporary HTML;
- creating, by the backend, a temporary canvas object and painting the decrypted information structure onto the temporary canvas object;
- pulling out, by the backend, image data from the temporary canvas object with the decrypted information structure on it, then deleting everything of the decrypted data leaving only the image data and the dimensions of the canvas;
- sending, by the backend, the image data together with the dimensions of the canvas back to the frontend;
- relocating, by the frontend, the initial encrypted data string and replacing, by the frontend, the initial encrypted data string with a blank canvas object with the dimensions retrieved from the backend and deleting the initial encrypted data string;
- adding, by the frontend, the image data to the blank canvas object.

In the context of the invention, canvas or canvas object is understood to mean an area on an HTML page. By default, a canvas has no border and no content. This is also named a blank canvas or empty canvas. A canvas is used to draw graphics on the fly but is only a container for graphics. The image data together with the canvas dimensions and legal prompts, if present, taken out of the decryption, are the only thing that the backend communicates back to the frontend. The backend can also send size dimensions back to the frontend so that the frontend canvas displays the information correctly.

According to another embodiment, the method further comprises sending the encryption data string with security tag type in form of a DataURL.

According to yet another embodiment, the method in the step of encryption further comprises encrypting or decrypting, by the backend, the sensitive data with at least one security key.

According to yet another embodiment, the security key is a shared key, a private key, a corporate key or a combination of one or more of these keys. The shared key can be a unique conversation ID that everyone in a conversation shares as a member of the conversation. However, in such a case, it is preferred but not essential that the shared key is always present to guarantee a minimum level of encryption. So, if the encrypted data is taken out of a conversation and pasted into another conversation, then the decryption will fail. This ensures that raw text is not copied out of a sensitive conversation without the owner's or user's permission. The private key is an additional information to the shared key in form of a private key phrase. So, it is an additional key that the sensitive data owner can add to the shared key. The owner will have to communicate this key to the members of the same conversation and that can be plugged into the users' settings of the application. And further, a shared corporate certificate/string could be added to the user settings. The corporate key is also an additional information to the shared key in form of a group certificate or string being shared amongst users of a group. The encryption techniques can be symmetric (e. g. using the shared key only) or asymmetric (e. g. using key pairs such as a shared key and a private key). Also note, if an encryption is copied to another conversation or platform (copy and paste without owner's permission), the decryption will not work by design. The frontend will send encrypted data to be decrypted by the backend. The decrypted text is retained in the backend and never leaves this domain.

Furthermore, when a user selects sensitive data that needs decrypting, the encrypted data string will have a type identifier. The frontend will look at the security tag type and decide what actions to do before sending all the information to the backend. For example, if the tag is of "*shield1"* type, the frontend will send the encrypted data string directly to the backend to decrypt. If the security tag type is of *"shield2"* type, the frontend will know that the sensitive data owner has set a private key phrase. The frontend will then ask the user for the key phrase and add this to the shared key (conversation ID) before sending all the information to the backend. Further, if the frontend detects a *"shield3"* type it knows that it has to get the certificate information from the user setting and add this to the shared key.

According to yet another embodiment, the method further comprises detecting, by the application, the format of the sensitive data; and encrypting or decrypting, by the backend, additionally the data format of the sensitive data. For example, if the data is simple text, then just the text is encrypted. If there is some kind of HTML format such as a smiley, then the application will capture the entire HTML structure. When the user decrypts back the data, the backend will use the HTML structure as the basis to paint the canvas. This ensures that the original structure of the information is retained.

According to yet another embodiment, the data format or data type of the sensitive data comprises simple text, HTML, XML, SMS, email, JSON, RDF, Images, favicons, SVG and/or PNG. There are several formats which can be captured, for example, XML, SMS, image, PNG, and/or SVG can be sent to the backend to paint a new canvas which in turn generates a DataURL of the image etc. This DataURL could form the information representing the image. This could also be covered by a security tag type such as *"shield4".* As it currently stands, an encrypted email does not allow for legalities to be shown to a user prior to decryption. However, with the present invention, the main body or certain paragraphs of an email can be protected without affecting the email footer or disclaimer.

According to yet another embodiment, the method further comprises adding, by the backend, a legal notification to the encryption data string as part of the encryption data string. Legal notifications are clear text wordings that can be placed at the beginning of an encryption data string and form part of the encryption string itself. Removing the clear text nullifies the encryption. E. g. <shield1>Authorized Access Only!@legal-abcde-fghijk-etc</shield1>. Continuing to decrypt this message without authorization will result in a quicker prosecution under existing legislation.

According to yet another embodiment, the method further comprises adding, prior to the encryption, a legal prompt to be encrypted together with the sensitive data. Legal prompts are taken out of the decrypted text. Legal prompts are embedded into the encryption method that require the user viewing the sensitive data to acknowledge the statement that the sensitive data owner has added to the protection. For example, a sensitive data owner has enabled legal prompts in the settings of the application. The owner has added text to the legal prompt saying "Authorized Access Only! Do not continue without permission". The user (owner) then adds selected text with sensitive data. The legal prompts will now be sent with the sensitive text to the backend to generate an encryption data string. The legal prompt is now no longer visible as it is now stored inside of the encrypted data string. When someone else opens the encrypted data string, the frontend will identify that a legal prompt has been returned from the backend. The frontend can then, for example, generate a random 4-digit number and prompt the user to enter the same 4 digits. The digits are located next to the legal prompt that the data owner originally created. This method ensures that existing legislation is maximized and increases successful prosecution.

Both legal prompts as well as legal notices or notifications can be selected and customized by the user in the settings of the application. They can also be used together or on their own. Further, watermarks can also be added via the user settings of the application. These are fully customizable by the user. E. g.: color = HTML code for the color to use, primary text = Authorized Access, or secondary text = GDPR Information. Watermarks are painted onto the temporary backend canvas prior to the main decrypted text. A DataURL of the canvas can then be sent to the frontend as the image source for the frontend canvas.

According to yet another embodiment, the frontend and/or the backend is a script and/or wherein the frontend is a context script and/or the backend is a web worker or a service worker.

According to yet another embodiment, the method is executed within a digital conversation having a unique conversation ID. In the sense of the invention, a digital conversation can be any kind of text conversation such as a chat conversation, an SMS conversation, an email conversation and the like. Thereby, users or participants in the same conversation will automatically be able to decrypt the encrypted sensitive data into a readable form that is not plain text. The content (sensitive data) that was encrypted in a unique conversation cannot be decrypted outside of the unique conversation that the encryption was created in.

According to yet another embodiment, the encryption and/or the decryption is fully self-contained and does not require network access to encrypt and/or decrypt the sensitive data. This means to guarantee security, no further code is required by the application. Also, no code is required online. By ensuring this, the application can guarantee that no part of the code is compromised by malicious network traffic or malicious code sitting in the user's computer system.

According to yet another aspect of the present invention, an application is provided which is configured to perform the method according to one or more of the aforementioned embodiments.

According to yet another embodiment, the application is or is part of a communication and/or collaboration application, a browser application, a browser extension, a browser add-on, a software, a software as a service (SAAS), a cloud application and/or a local application running on a computer, a server or a mobile device.

According to yet another embodiment, the application comprising a frontend, a backend, a frontend script, a backend script, a protected area and/or all script libraries which are needed to perform the method; and/or wherein the frontend script is a context script or a context JavaScript and/or the backend script is a web worker or a service worker. According to yet another aspect of the present invention, a system is provided, wherein the system comprises an application according to one of the aforementioned embodiments and wherein the system further comprises:
- a client having the application to perform the method,
- a server application which is connected over a network with the client,
- a database.

According to yet another aspect of the present invention, a program element is provided, which when being executed by a processor is adapted to carry out steps of the method for secure handling of sensitive data within a Document Object Model (DOM).

According to another aspect of the present invention, a computer-readable medium comprising program code is provided, which when being executed by a processor is adapted to carry out steps of the method for secure handling of sensitive data within a Document Object Model (DOM).

A computer-readable medium may be a floppy disk, a hard disk, a USB (Universal Serial Bus) storage device, a RAM (Random Access Memory), a ROM (Read Only Memory) or an EPROM (Erasable Programmable Read Only Memory). A computer-readable medium may also be a data communication network, e. g. the Internet, which may allow downloading a program code.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed.

The invention and embodiments thereof will be described below in further detail in connection with the drawing(s).
- Fig. 1a: shows a schematic illustration of a representation of clear text in the frontend of an application which uses a Document Object Model according to the state of the art.
- Fig. 1b: shows a schematic illustration of a representation of clear text in the backend of an application which uses a Document Object Model according to the state of the art.
- Fig. 2a: shows a schematic illustration of a representation of encrypted text in the frontend of an application which uses a Document Object Model according to an embodiment of the invention.
- Fig. 2b: shows a schematic illustration of a representation of encrypted text in the backend of an application which uses a Document Object Model according to another embodiment of the invention.
- Fig. 3a: shows a schematic illustration of a representation of an image-based data with readable text after decrypted in the frontend of an application which uses a Document Object Model according to another embodiment of the invention.
- Fig. 3b: shows a schematic illustration of a representation of an image-based data after decryption in the backend of an application which uses a Document Object Model according to another embodiment of the invention.
- Fig. 4: shows in a schematic illustration of the application to handle sensitive data according to another embodiment of the invention.
- Fig. 5: shows in a schematic illustration of a system handling sensitive data according to the state of the art.
- Fig. 6: shows in a schematic illustration of the system to handle sensitive data according to another embodiment of the invention.

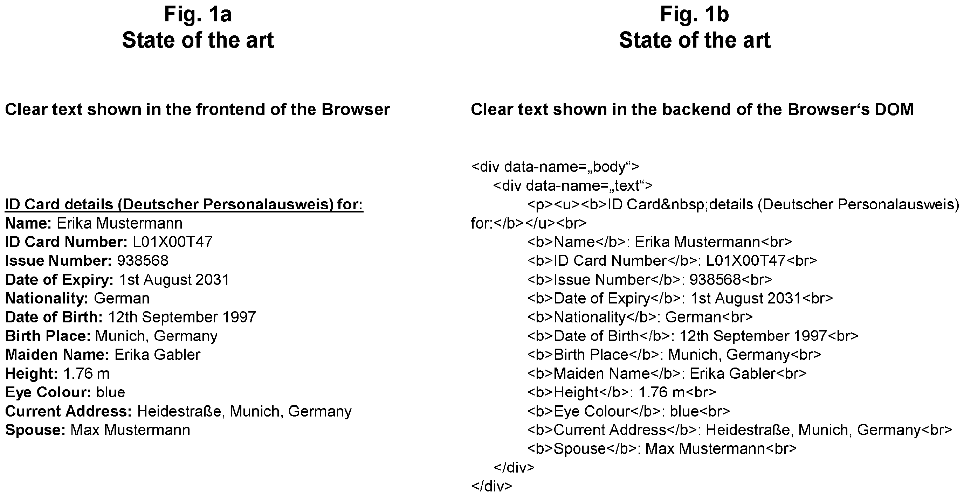

Fig. 1a and 1b schematically show how clear text can be represented in the frontend 1a or the backend 1b of an application which uses a Document Object Model (DOM) according to the state of the art. Such an application may be a browser or may be a communication and/or collaboration tool or the like. From the figures, it is clear that sensitive data can be read in plain text in both the frontend and the backend in the DOM structure of the application, e. g. a browser.

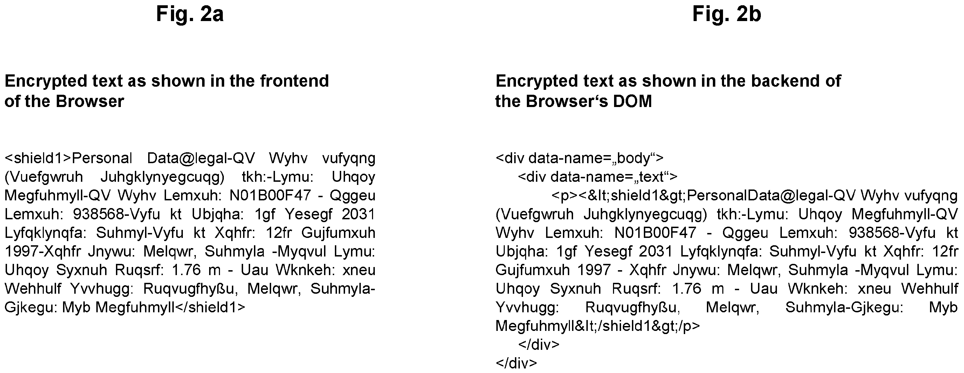

In contrast to Fig. 1a and 1b, as can be seen from Fig. 2a and 2b, sensitive data cannot be read automatically because it is in encrypted form. Fig. 2a and 2b schematically show a representation of encrypted text in the frontend 2a and backend 2b of an application which uses a Document Object Model according to an embodiment of the invention. The encrypted sensitive data is embedded in a special security tag (for example embedded in the <shield1>...</shield1> HTML syntax of the frontend depicted in Fig. 2a). However, if the application is a browser application, for example, this security tag is not a current HTML standard tag.

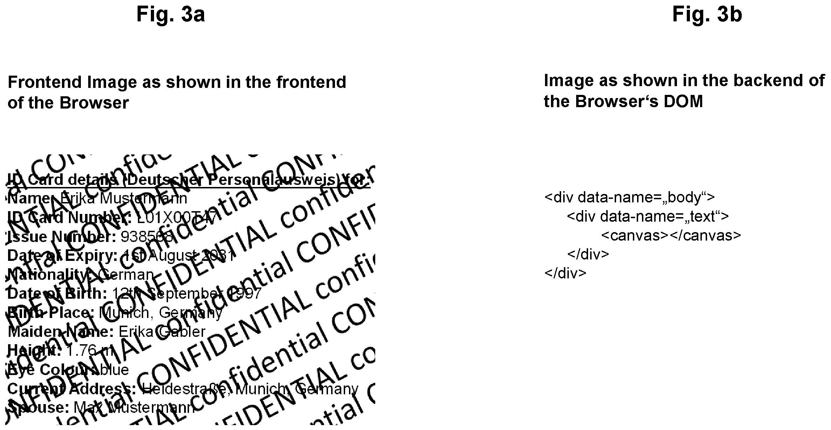

Fig. 3a and 3b schematically show a representation of an image with readable text after decryption in the frontend 3a and in the backend 3b of an application which uses a Document Object Model according to another embodiment of the invention. Readable text is understood to mean that a person or a user of the application can read the text with ease, but it is not possible for a text analysis software that interprets text and/or extracts text from data to decipher the text because it is present as an image with additional objects (canvas). In addition, watermarks and the like can be placed behind the text which on the one hand may indicate confidentiality and on the other hand make it more difficult for a software or a bot to interpret the text. Also, no clear text is present in the backend, but only the image-based data are deposited, which do not allow any conclusion on the text in the images. This means that even when the data is decrypted, it cannot be read by third parties, for example, in the form of a bot, or Trojan. The result is that at no point after decryption will any part of the data be displayed in clear text form in the application's (e. g. browser's) frontend or the background DOM tree. If any unwanted code happens to run on the computer that can gain access to the application's DOM tree, it will only obtain either the encrypted string or the visual representation of the decrypted data, including watermarks. This means that if either the textContent, innerHTML, or outerHTML are compromised then the encrypted data will still be protected after decryption. This invention will help to protect any data that has been encrypted from being shown in a clear text within an application's/ a browser's Document Object Model's tree by converting the decrypted text into a pictorial representation of the decrypted text.

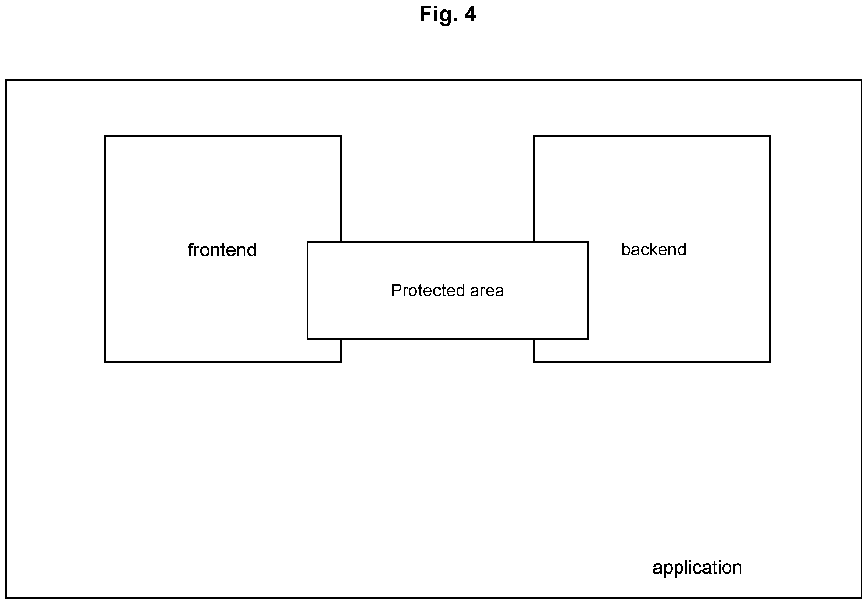

Fig. 4 shows in a schematic illustration of the application components to handle sensitive data according to the method of the invention. The application components do not replace existing standards such as database encryption or HTTPS. The application provides additional security. The invention ensures that users have full control over who can see the data that they send, for example, in a cloud. This means that no administrators, network hacks, or malicious code(s) will be able to view the contents of the information being stored inside of an encrypted data string according to the invention.

The application comprises all the code(s) needed to process and send messages/data to and from a browser or other applications, e. g. an email application of a user. A context script (aka frontend script) processes messages/data from the frontend and sends them to the service worker (aka backend script) in the backend (via the protected area). The frontend and backend are restricted by design. For example, in a modern browser by standards (e. g. manifest v3) and these scripts cannot communicate with each other outside the concept of this design. The application comprising a context JavaScript (or frontend script), a service worker (or backend script), as well as all standard JavaScript libraries which are needed to perform all steps/tasks of the inventive method.

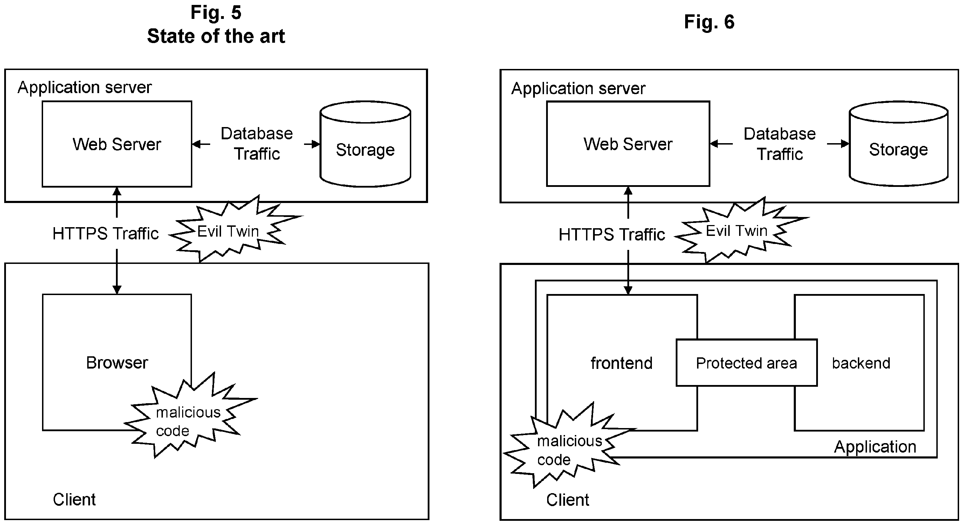

In Fig. 5 schematic illustration of a system handling sensitive data according to the state of the art is shown. In today`s world, any data stored in a database (storage) is encrypted at rest and any data being transmitted is protected by Hypertext Transfer Protocol Secure (HTTPS). The problem to be solved is to prevent an application server and/or database administrators from decrypting data stored at rest (unauthorized or authorized). Before the application server sends stored information back to the client, it must decrypt this information. This information is then protected in transit via HTTPS. Network attacks such as Evil Twin can intercept HTTPS traffic and view any text being transmitted from the server to the client. Once the client receives the information from the server via HTTPS, the browser will display the information in the browser as if it was never protected in the first place, i. e., clear text in the browser's Document Object Model (DOM) tree. This leaves the information exposed to malicious code running on the client's computer or browser.

Fig. 6 shows a schematic illustration of the inventive system to handle sensitive data according to another embodiment of the invention. The inventive system resolves all these problems shown in Fig. 5. As shown in Fig. 6, the encrypted data string is sent to the application server (arrows). This data is encrypted again using today's standard procedures. Any attempts by the administrator to decrypt the data will result in the administrator only seeing the encrypted data string information (no clear text). The application server sends encrypted data string information back to the client via HTTPS. Network attacks can still intercept HTTPS traffic (e. g. Evil Twin) but will only see encrypted data string information. Once the client receives encrypted data string information from the server, the encrypted data string will be processed with the inventive application configured to perform the inventive method. At the end, the sensitive data information is displayed in the frontend of the application (e. g. in a browser or a browser extension) not as text but as, for example, watermarked canvas. No information is exposed to malicious code running on the client's computer or browser in clear text form. The application and the visibility of sensitive data is controlled and managed by the information owner.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for secure handling of sensitive data within a Document Object Model, DOM, wherein the method comprising the steps of:
- detecting, by a frontend of an application, a placing of sensitive data to a protected area by a user;
- sending, by frontend, the sensitive data to a backend of the application via the protected area;
- encrypting, by the backend, the sensitive data with encryption techniques;
- converting, by the backend, the encrypted sensitive data into an encryption data string by using a security tag type; and,
- sending, by the backend, the encryption data string with security tag type back to the frontend.

2. The method according to claim 1, wherein the method further comprising the steps:
- Identifying, by the frontend, the security tag type in the encrypted data string;
- Sending, by the frontend, the encrypted data via the protected area to the backend for decryption;
- Decrypting, by the backend, the data into clear text and rebuilding the decrypted information structure as a temporary HTML;
- Creating, by the backend, a temporary canvas object and painting the decrypted information structure onto the temporary canvas object;
- Pulling out, by the backend, image data from the temporary canvas object with the decrypted information structure on it, then deleting everything of the decrypted data leaving only the image data and the dimensions of the canvas;
- sending, by the backend, the image data together with the dimensions of the canvas back to the frontend;
- relocating, by the frontend, the initial encrypted data string and replacing, by the frontend, the initial encrypted data string with a blank canvas object with the dimensions retrieved from the backend and deleting the initial encrypted data string;
- adding, by the frontend, the image data to the blank canvas object.

3. The method according to claim 1 or 2, wherein the method further comprises sending the encryption data string with security tag type in form of a DataURL.

4. The method according to any of the preceding claims, wherein in the steps of encryption or decryption the method further comprising:
- encrypting or decrypting, by the backend, the sensitive data with at least one security key.

5. The method according to claim 4, wherein the security key is a shared key, a private key, a corporate key, or a combination of one or more of these keys.

6. The method according to claim 1, wherein the method further comprising:
- detecting, by the application, the format of the sensitive data; and
- encrypting or decrypting, by the backend, additionally the data format of the sensitive data.

7. The method according to claim 6, wherein the format of the sensitive data is simple text, HTML, XML, SMS, email, JSON, RDF, Images, favicons, SVG and/or PNG.

8. The method according to any of the preceding claims, wherein the method further comprises adding, by the backend, a legal notification to the encryption data string as part of the encryption data string.

9. The method according to any of the preceding claims, wherein the method further comprises adding, prior to the encryption, a legal prompt to be encrypted with the sensitive data.

10. The method according to any of the preceding claims, wherein the method is executed within a digital conversation having a unique conversation ID.

11. The method according to any of the preceding claims, wherein encryption and/or decryption is fully self-contained and does not require network access to encrypt and/or decrypt sensitive data.

12. An application for secure handling of sensitive data within a Document Object Model, DOM, configured to perform the method according to one or more of the claims 1 to 11.

13. The application of claim 12, wherein the application is a communication and/or collaboration application, a browser application, a browser extension, a browser add-on, a software, a software as a service, SAAS, a cloud application and/or a local application running on a computer, a server or a mobile device.

14. The application according to the claim 12 or 13, wherein the application comprising one or more of a frontend, a backend, a frontend script, a backend script, a protected area and/or all script libraries which are needed to perform the method; and/or wherein the frontend script is a context script and/or the backend script is a web worker or a service worker.

15. A system, wherein the system comprises an application according to one of the claims 12 to 14 and wherein the system further comprises:
- a client having the application to perform the method,
- one or more server application which is connected over a network with the client,
- a database.
